# FASCICULE DE BREVET EUROPEEN

(11) **EP 1 519 467 B1**
(45) Date de publication et mention de la délivrance du brevet: **22.08.2012**
(21) Numéro de dépôt: 04292247.6
(22) Date de dépôt: 20.09.2004
(51) Int. Cl.: H02J 9/06, H02J 7/34

(54) **Dispositif d'alimentation d'un équipement et système d'alimentation d'équipement**
Stromversorgung einer Einrichtung und Stromversorgungssystem für Einrichtung
Power supply for an equipment and equipment power supply system

(30) Priorité: 29.09.2003 FR 0311356
(43) Date de publication de la demande: 30.03.2005
(73) Titulaire: Sagem Défense Sécurité, 75015 Paris (FR)
(72) Inventeur: Guillot, François, 94260 Fresnes (FR)
(74) Mandataire: Lavialle, Bruno François Stéphane

(56) Documents cités:
- US-A1- 2001 035 735
- US-B1- 6 192 687
- US-B1- 6 225 708

## Description

La présente invention concerne un dispositif d'alimentation d'un équipement tel qu'un équipement embarqué dans un véhicule et notamment un avion. L'invention a également pour objet un système d'alimentation d'équipements.

### ARRIERE PLAN DE L'INVENTION

Afin d'augmenter la qualité de travail des équipages des avions et le confort de leurs passagers, les constructeurs aéronautiques tentent d'implanter dans les avions des serveurs informatiques permettant par exemple à l'équipage d'accéder à des données relatives au vol et/ou aux passagers d'accéder à des programmes de divertissement ou d'agrément.

Dans un avion, les équipements électriques embarqués sont en général alimentés par l'énergie électrique produite par un ou plusieurs alternateurs entraînés par le ou les moteurs de l'avion.

Les contraintes de fonctionnement des alternateurs engendrent un risque que surviennent sur le réseau des chutes de tension qui peuvent durer jusqu'à 200 milli-secondes.

Or, dans le cas de serveurs informatiques, de telles chutes de tension peuvent entraîner une mise hors service brutale, éventuellement accompagnée d'une perte de données.

Pour obvier à cet inconvénient, il est connu sur des réseaux présentant de telles chutes de tension de relier chaque serveur informatique au réseau d'alimentation par l'intermédiaire d'une batterie associée à une électronique spécifique assurant le maintien en charge de la batterie par le réseau. Un onduleur est interposé entre la batterie et le serveur pour reproduire la tension alternative alimentant normalement le serveur informatique. Les serveurs informatiques ne sont alors pas affectés par les fluctuations de tension risquant de survenir sur le réseau d'alimentation. Toutefois, une telle architecture présente un rendement médiocre en mode normal de fonctionnement. En outre, la multiplication des batteries induit une masse et encombrement importants qui seraient pénalisants pour une utilisation dans un avion.

Le document US 6.225.708 B1 décrit un dispositif d'alimentation d'un équipement à partir d'au moins un réseau fournissant une tension alternative et d'au moins une batterie fournissant une tension continue qui comprend:
- une première branche qui est reliée au réseau et qui comporte un organe de transformation de la tension alternative en une tension continue équivalente,
- une deuxième branche qui est reliée à la batterie et qui comporte un élévateur de tension pour amener la tension continue fournie par la batterie à une tension de sortie voisine de la tension continue équivalente à la tension alternative,
- la première branche et la deuxième branche étant reliées par un organe de commutation à un noeud électrique dans le but de fournir une tension continue d'alimentation de l'équipement.

### OBJET DE L'INVENTION

Un but de l'invention est de fournir un dispositif amélioré d'alimentation d'un équipement, à partir d'un réseau et d'une batterie, qui présente un bon rendement en mode normal de fonctionnement.

### BREVE DESCRIPTION DE L'INVENTION

A cet effet, on prévoit, selon l'invention, un dispositif d'alimentation d'un équipement à partir d'au moins un réseau fournissant une tension alternative et d'au moins une batterie fournissant une tension continue avec les caractéristiques techniques de la revendication 1.

Ainsi, en mode normal de fonctionnement, le convertisseur est alimenté via la première branche de sorte que le rendement de l'alimentation est le produit du rendement de l'organe de transformation et du rendement du convertisseur. Il en résulte un rendement optimal en mode normal.

Le raccordement des équipements à une batterie commune permet de limiter la masse et le volume de batterie à emporter.

De préférence, la tension de sortie de l'élévateur de tension est légèrement inférieure à la tension en sortie de l'organe de transformation de la première branche et le moyen de commutation est une cellule OU à diodes.

Ainsi, la première branche alimente le convertisseur tant que la tension en sortie de l'organe de transformation est supérieure à la tension de sortie de l'élévateur de tension et une commutation automatique sur la deuxième branche se produit dès que la tension en sortie de l'organe de transformation est inférieure à la tension de sortie de l'élévateur. Ce mode de commutation est particulièrement simple et fiable.

D'autres caractéristiques et avantages de l'invention ressortiront à la lecture de la description qui suit d'un mode de réalisation particulier non limitatif de l'invention.

### BREVE DESCRIPTION DES DESSINS

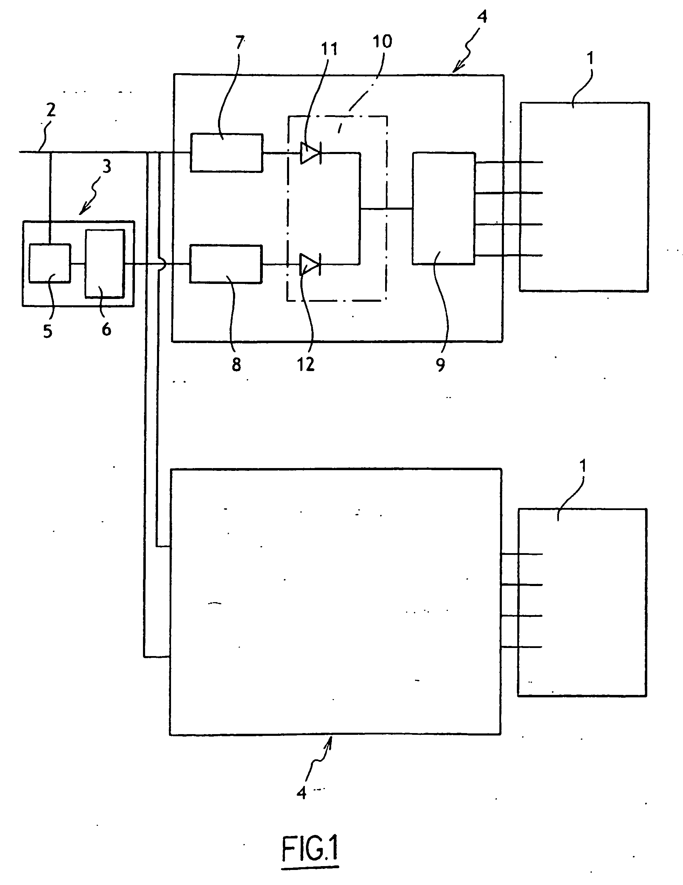

Il sera fait référence à la figure unique annexée représentant schématiquement un circuit d'alimentation d'un équipement.

### DESCRIPTION DETAILLEE DE L'INVENTION

En référence à la figure, le système d'alimentation conforme à l'invention, est ici décrit en application à l'alimentation d'un serveur informatique 1 embarqué à l'intérieur d'un avion ayant des moteurs entraînant des alternateurs d'un réseau 2 de distribution d'électricité. Les alternateurs délivrent une tension alternative ici une tension efficace de 115 volts.

Le système d'alimentation conforme à l'invention comprend une unité commune d'alimentation auxiliaire 3 reliée au réseau 2, et des dispositifs d'alimentation 4 associés à chaque serveur informatique 1 et chacun relié à la fois à l'unité commune 3 et au réseau 2.

L'unité commune 3 comprend un chargeur 5 et relié au réseau 2 et à une batterie 6 pour charger celle-ci. Le chargeur 5 est connu en lui-même et assure la conversion de la tension alternative du réseau 2 en une tension continue utilisée pour produire un courant de maintien en charge de la batterie 6. La batterie 6 fournit ici une tension continue de 28 volts.

Chaque dispositif d'alimentation 4 comprend une première branche qui est reliée au réseau 2 et une deuxième branche qui est reliée à la batterie 6 de l'unité commune 3.

La première branche comporte un organe de transformation 7 de la tension alternative du réseau 2 en une tension continue équivalente. L'organe de transformation 7 est agencé de façon connue en elle-même pour redresser et filtrer le courant électrique du réseau 2, par exemple pour fournir une tension continue régulée de 200 volts équivalente à la tension alternative efficace de 115 volts du réseau 2. L'organe de transformation 7 comprend notamment ici un circuit correcteur connu en lui-même pour corriger la forme du courant induit et la phase de ce courant par rapport à la tension qui produit ce courant.

La deuxième branche comporte un élévateur de tension 8 qui amène la tension continue fournie par la batterie 6 à une tension continue de sortie voisine de la tension continue équivalente à la tension alternative du réseau 2. En l'espèce, la tension de sortie de l'élévateur de tension 8 est légèrement inférieure à la tension en sortie de l'organe de transformation 7. Ainsi, si la tension en sortie de l'organe de transformation 7 est régulée à 200 volts plus ou moins dix pour cent, la tension de sortie de l'élévateur de tension 8 est de préférence fixée à 180 volts.

La première branche et la deuxième branche sont reliées à un convertisseur 9 par un organe de commutation 10.

Le convertisseur 9 est un convertisseur continu/continu à découpage agencé pour transformer la tension continue équivalente à la tension alternative du réseau 2 en des tensions continues d'alimentation de l'unité centrale du serveur 1.

L'organe de commutation 10 est une cellule OU qui comprend une diode 11 fixée sur la première branche et une diode 12 fixée sur la deuxième branche.

De cette manière, en mode normal, lorsque le réseau 2 fournit la tension alternative de 115 volts, la tension en sortie de l'organe de transformation 7 est supérieure à la tension de sortie de l'élévateur de tension 8 de sorte que seule la diode 10 est conductrice. La première branche alimente ainsi le convertisseur 9.

En cas de défaillance du réseau 2, par exemple lors d'une coupure d'électricité, la tension en sortie de l'organe de transformation 7 est inférieure à la tension de sortie de l'élévateur de tension 8. La diode 12 devient alors automatiquement la seule diode conductrice et la deuxième branche alimente alors le convertisseur 9. L'énergie électrique fournie au convertisseur 9 par la batterie 6 peut par exemple être utilisée pour mettre en oeuvre la procédure normale d'arrêt du fonctionnement des serveurs 1.

Bien entendu, l'invention n'est pas limitée au mode de réalisation décrit et on peut y apporter des variantes de réalisation sans sortir du cadre de l'invention tel que défini par les revendications.

En particulier, l'invention est applicable à l'alimentation d'autres équipements que les serveurs informatiques.

En outre, le véhicule sur lequel est installé le système d'alimentation peut comprendre plusieurs réseaux de distribution de tension alternative et de tension continue. Le dispositif d'alimentation peut alors être raccordé à l'un ou plusieurs de ces réseaux.

Par ailleurs, les valeurs numériques sont données à titre purement indicatif et sont susceptibles d'être modifiées en fonction par exemple des puissances à faire passer.

La batterie 6 peut également être chargée par une source d'alimentation extérieure lorsque le véhicule est à l'arrêt.

En variante, il est possible de connecter entre la batterie 6 et les deuxièmes branches des dispositifs d'alimentation un dispositif de protection connu en lui-même et destiné à protéger les deuxièmes branches contre les surintensités faibles et de relativement longue durée, et les surintensités fortes et de relativement courte durée. Un tel dispositif effectue une mesure de courant et en cas de franchissement d'un seuil paramétrable, coupe la sortie 28 V au bout d'une durée prédéterminée.

## Revendications

1. Système d'alimentation d'au moins deux équipements (1) à partir d'au moins un réseau (2) fournissant une tension alternative, comprenant au moins une batterie (6) reliée directement au réseau (2) avec un chargeur (5) et, en aval de cette liaison, des dispositifs d'alimentation (4) reliés chacun au réseau, à la batterie (6) et à un des équipements (1), Chaque dispositif d'alimentation comprenant :
- une première branche qui est reliée au réseau et qui comporte un organe de transformation (7) de la tension alternative en une tension continue équivalente,
- une deuxième branche qui est reliée à la batterie et qui comporte un élévateur de tension (8) pour amener la tension continue fournie par la batterie à une tension de sortie voisine de la tension continue équivalente à la tension alternative,
- la première branche et la deuxième branche étant reliées par un organe de commutation (10) à un convertisseur (9) agencé pour transformer la tension continue équivalente à la tension alternative du réseau en au moins une tension continue d'alimentation de l'équipement.

2. Système d'alimentation selon la revendication 1, **caractérisé en ce que** la tension de sortie de l'élévateur de tension (8) est légèrement inférieure à la tension en sortie de l'organe de transformation de la première branche et **en ce que** le moyen de commutation est une cellule ou (10) à diodes (11, 12).

## Claims

1. A power supply system for powering at least two pieces of equipment (1) from at least one network (2) supplying AC, the system comprising at least one battery (6) connected directly to the network (2) with a charger (5) and, downstream from said connection, power supply devices (4) each connected to the network, to the battery (6), and to a respective one of the pieces of equipment (1), each power supply device comprising:
· a first branch that is connected to the network and that comprises a transformation member (7) for transforming the AC voltage into an equivalent DC voltage;
· a second branch that is connected to the battery and that comprises a voltage booster (8) for raising the DC voltage supplied by the battery to an output voltage close to the DC voltage equivalent to the AC voltage; and
· the first branch and the second branch being connected by a switch member (10) to a converter (9) arranged to transform the DC voltage equivalent to the AC voltage of the network into at least one DC voltage for powering the equipment.

2. A power supply system according to claim 1, **characterized in that** the output voltage from the voltage booster (8) is slightly lower than the output voltage from the transformation member of the first branch, and **in that** the switch means is an OR cell (10) having diodes (11, 12).

## Patentansprüche

1. Stromversorgungssystem zum Versorgen mindestens zweier Geräte (1) aus mindestens einem Netz (2), das eine Wechselspannung liefert, umfassend mindestens eine Batterie (6), die direkt an das Netz (2) angeschlossen ist mit einem Ladegerät (5) und dieser Verbindung nachgeschaltet Stromversorgungsgeräte (4), die jeweils an das Netz, die Batterie (6) und eines der Geräte (1) angeschlossen sind, wobei jedes Stromversorgungsgerät umfasst:
- einen ersten Zweig, der an das Netz angeschlossen ist und der ein Transformationsorgan (7) aufweist zum Umformen der Wechselspannung in eine äquivalente Gleichspannung,
- einen zweiten Zweig, der an die Batterie angeschlossen ist und der einen Aufspanntransformator (8) aufweist zum Erhöhen der von der Batterie gelieferten Gleichspannung auf eine Ausgangsspannung, die benachbart ist zu der Gleichspannung, die der Wechselspannung entspricht.
- wobei der erste Zweig und der zweite Zweig über ein Umschaltorgan (10) an einen Wandler (9) angeschlossen sind, der so ausgebildet ist, dass er die der Wechselspannung des Netzes entsprechende Gleichspannung in mindestens eine Gleichspannung zur Versorgung des Geräts umformt.

2. Stromversorgungssystem nach Anspruch 1, **dadurch gekennzeichnet, dass** die Ausgangsspannung des Aufspanntransformators (8) etwas geringer ist als die Ausgangsspannung des Transformationsorgans des ersten Zweigs, und dass das Umschaltorgan eine aus Dioden (11, 12) gebildete ODER-Zelle ist.
